# EUROPÄISCHE PATENTSCHRIFT

(11) **EP 2 719 565 B1**
(45) Veröffentlichungstag und Bekanntmachung des Hinweises auf die Patenterteilung: **19.07.2017**
(21) Anmeldenummer: 13183353.5
(22) Anmeldetag: 06.09.2013
(51) Int. Cl.: B60K 11/04, B62D 21/15, B62D 25/08

(54) **Vorbaustruktur für ein Nutzkraftfahrzeug**
Front structure for a motor vehicle
Structure avant pour un véhicule automobile

(30) Priorität: 11.10.2012 DE 102012019933
(43) Veröffentlichungstag der Anmeldung: 16.04.2014
(73) Patentinhaber: Volkswagen Aktiengesellschaft, 38440 Wolfsburg (DE)
(72) Erfinder: Päuker, Wolfgang, 38124 Braunschweig (DE); Briest, Mathias, 39646 Oebisfelde (DE)

(56) Entgegenhaltungen:
- EP-A1- 1 232 931
- DE-A1- 10 051 567
- DE-A1-102004 014 073
- DE-A1-102005 058 180
- DE-A1-102009 058 287

## Beschreibung

Die vorliegende Erfindung betrifft eine Vorbaustrukturfür ein Nutzkraftfahrzeug gemäß dem Oberbegriff des Patentanspruchs 1.

Aus der DE 10 2004 038 487 A1 ist eine Vorbaustruktur bekannt, bei der unter anderem ein Stoßfängerquerträger und darunter ein Unterfahrschutz-Querträger zu einer Montageeinheit verbunden sind, die zudem ein hinter dem Stoßfänger-Querträger positioniertes Kühlermodul tragen. Da die beiden Querträger im Wesentlichen in einer einheitlichen Vertikalquerebene liegen, sitzt bauartbedingt das Kühlermodul dicht hinter den Querträgern, ist also zum Beispiel bei einem Frontalcrash vermehrt Beschädigungen ausgesetzt. Ferner decken die jeweils bis zur seitlichen Fahrzeugaußenkontur gezogenen Querträger frontseitige Flächehbereiche ab, die gegebenenfalls als Lufteinströmöffnungen für Kühlermodule nützlich wären.

Aus der DE 100 51 567 A1 ist eine gattungsgemäße Vorbaustruktur für ein Nutzfahrzeug bekannt, bei dem ein Kühlermodul auf einem Unterfahrschutz-Querträger abgestützt ist. Aus der DE 10 2009 058 287 A1 ist eine weitere Vorbaustruktur bekannt, bei der ein Stoßfängerquerträger sowie ein darunter angeordneter, als Unterfahrschutz dienender Querträger vorgesehen ist. Eine solche Vorbaustruktur ist auch aus der DE 10 2005 058 180 A1 sowie aus der EP 1 232 931 A1 und aus der DE 10 2004 014 073 A1 bekannt.

Aufgabe der Erfindung ist es, eine baulich und fertigungstechnisch günstige Vorbaustruktur zu schaffen, die neben ausreichenden Verformungswegen bei einem Frontalcrash vorteilhafte Anordnungen von Kühlermodulen ermöglicht.

Die Lösung dieser Aufgabe ist den Merkmalen des Patentanspruchs 1 entnehmbar. Vorteilhafte und besonders zweckmäßige Weiterbildungen der Erfindung sind Gegenstand der abhängigen Ansprüche.

Erfindungsgemäß wird vorgeschlagen, dass der Unterfahrschutz-Querträger zum Stoßfängerquerträger in Seitenansicht gesehen um ein Maß a zur vorderen Fahrzeugaußenkontur nach hinten versetzt ist und das Kühlermodul trägt. Damit gelingt es, das Kühlermodul relativ vom Stoßfängerquerträger abzurücken und Verformungsweg bei einem Crash zu schaffen, der das Kühlermodul zunächst vor Beschädigung schützt und/oder einen zusätzlichen Einbauraum zu gewinnen.

Insbesondere kann der Stoßfängerquerträger im Wesentlichen bei den Rahmenlängsträgern enden und über Deformationselemente mit diesen verbunden sein, wobei das Kühlermodul in einer hinter den Deformationsetementen liegenden Vertikalquerebene positioniert ist.

In vorteilhafter Weiterbildung der Erfindung kann der Unterfahrschutz-Querträger seitlich den Stoßfängerquerträger überragend bis zur Radspur der Vorderräder des Nutzkraftfahrzeugs herangeführt sein und zusätzlich einseitig oder beidseitig außerhalb der Rahmenlängsträger befindliche Radhaus-Kühlmodule tragen. Diese Kühlmodule sind von dem kürzer ausgeführten Stoßfängerquerträger nicht überdeckt und können somit über frontseitige Einströmgitter wirksam mit Fahrtwind angeströmt werden.

Das Maß a bzw. das Zurücksetzen des Unterfahrschutz-Querträgers kann ca. 400 mm betragen, wobei die Unterkante des Unterfahrschutz-Querträgers auf < 400 mm zur Fahrbahn eingestellt ist. Dies stellt im Rahmen gesetzlicher Vorgaben eine baulich günstige Konstruktion mit einem vorgegebenen Böschungswinkel an der Fahrzeugvorderseite sicher.

Erfindungsgemäß ist der Unterfahrschutz-Querträger über mehrere Vertikalstreben und über untere Längsträger an die Rahmenlängsträger angebunden und somit bei einer sehr steifen Konstruktion eine im Crashfall vorteilhafte Krafteinleitung in die Rahmenlängsträger des Nutzkraftfahrzeugs sichergestellt.

Dabei können fertigungstechnisch günstig und montageeinfach die Vertikalstreben an die Schottbleche der Deformationselemente unmittelbar angeformt sein oder mit diesen eine Baueinheit bilden. Zudem können die unteren, eine geringere Steifigkeit als die Rahmenlängsträger aufweisenden Längsträger unterhalb der Rahmenlängsträger verlaufend mit diesen lösbar verbunden, insbesondere verschraubt sein.

Die die vordere Außenkontur bildende Frontschürze des Nutzkraftfahrzeugs kann besonders bevorzugt unter anderem an die Querträger angebunden sein, wobei der schräg nach vorne ansteigende Unterboden mit der Unterkante des Unterfahrschutz-Querträgers im Wesentlichen in einer Linie den Böschungswinkel definiert.

Schließlich können der Stoßfänger-Querträger mit den Deformationselementen, der Unterfahrschutz-Querträger mit den Vertikalstreben und den Längsträgern und die Kühlermodule eine Vormontageeinheit bilden, die unter anderem an die Rahmenlängsträger anbaubar ist.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine Vorbaustruktur für ein Nutzfahrzeug mit einem an die seitlichen Rahmenlängsträger angeschlossenen Stoßfängerquerträger, einem Unterfahrschutz-Querträger und mehreren Kühlermodulen;
- Fig. 2: in vereinfachter Darstellung die Vorbaustruktur nach Fig. 1 ohne Kühlermodule; und
- Fig. 3: eine Seitenansicht der Fig. 2 der Vorbaustruktur mit Darstellung des Maßes a und des Böschungswinkels α.

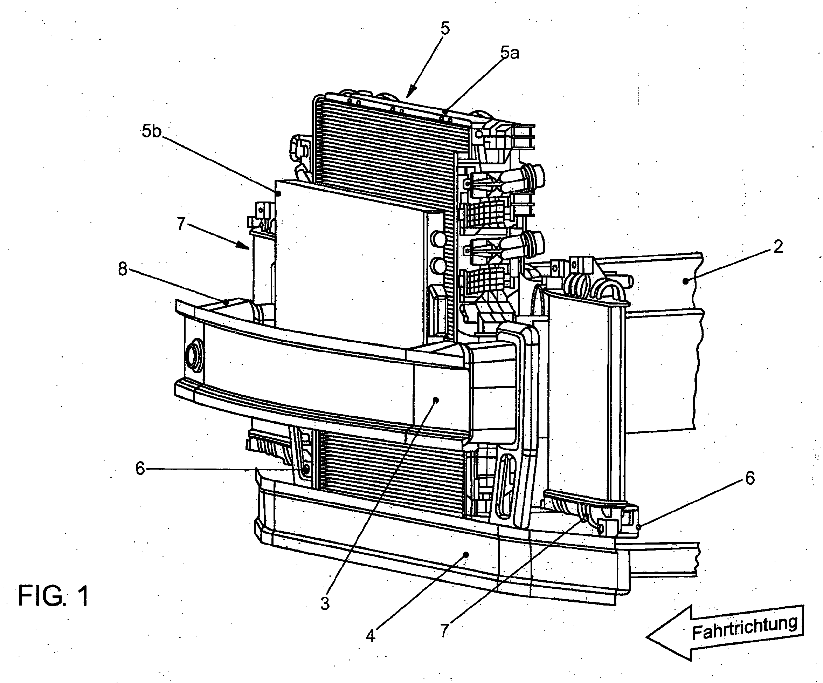

Die Fig. 1 zeigt teilweise eine Vorbaustruktur 1 für Nutzkraftfahrzeuge mit zwei zu beiden Seiten verlaufenden Rahmenlängsträgern 2, an die in einer höheren Position ein Stoßfängerquerträger 3 und in einer darunter liegenden Position ein Unterfahrschutz-Querträger 4 angeschlossen sind.

In Fahrtrichtung des Nutzkraftfahrzeugs betrachtet hinter dem Stoßfängerqüerlräger 3 bzw. dessen Deformationselemente 8 und zwischen den Rahmenlängsträgern 2 ist ein etwa vertikal ausgerichtetes Kühlermodul 5 mit zum Beispiel einem Wärmetauscher 5a und einem Kondensator 5b einer Klimaanlage angeordnet, das sich bis zu dem unten liegenden Unterfahrschutz-Querträger 4 erstreckt und unter anderem von diesem über nur angedeutete Befestigungsmittel 6 getragen ist. Obere Befestigungsmittel zum Beispiel an vorderen oder seitlichen Karosseriebauteilen sind nicht dargestellt und können bekannter Bauart sein.

Ferner trägt der seitlich nach außen bis zu den Radspuren der Vorderräder des Nutzfahrzeugs geführte Unterfahrschutz-Querträger 4 beidseitig außerhalb der Rahmenlängsträger 2 befindliche Radhaus-Kühlermodule 7, die - wie aus Fig. 1 ersichtlich ist - ebenfalls vertikal ausgerichtet sind und von dem an den Rahmenlängsträgern 2 endenden Stoßfängerquerträger 3 nicht überdeckt sind bzw. durch Lüftungsgitter (nicht dargestellt) in der Frontschürze des Nutzkraftfahrzeugs von vorne frei anströmbar sind. Die Kühlermodule 7 sind wiederum mittels Befestigungsmittel 6 am Unterfahrschutz-Querträger 4 und oberhalb an geeigneten Karosserieseitenteilen, Radhausblechen, etc. befestigt.

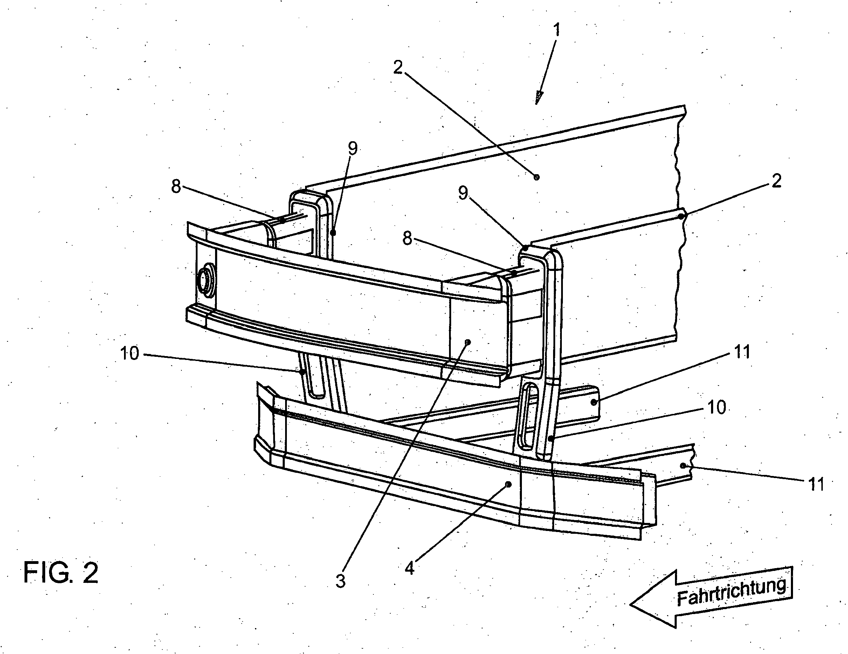

Die Fig. 2 zeigt die Vorbaustruktur 1 ohne Kühlermodul 5 und 7. Wie ersichtlich ist, ist der Stoßfängerquerträger 3, der in bekannter Weise aus einem Stahl-Profilblech gefertigt sein kann, über die Deformationselemente 8 und ein flächiges Schottblech 9 an die Stirnseiten der Rahmenlängsträger 2 angeschlossen bzw. fest mit diesen verschraubt (nicht dargestellt).

Der Unterfahrschutz-Querträger 4 ebenfalls aus einem Stahlprofilblech bestehend ist unmittelbar über zwei Vertikalstreben 10 an die Schottbleche 9 angebunden (angeformt oder angeschweißt).

Des Weiteren sind an dem Querträger 4 zwei in ihrer Steifigkeit bzw. Konfiguration schwächer als die Rahmenlängsträger 2 ausgeführte Längsträger 11 befestigt, die im Wesentlichen unterhalb der Rahmenlängsträger 2 und zunächst parallel dazu verlaufen und dann an nicht dargestellten, nach unten ragenden Abschnitten der Rahmenlängsträger 2 befestigt bzw. mit diesen verschraubt sind (oder umgekehrt).

Durch die dargestellte Konstruktion bilden der Stoßfängerquerträger 3 mit den Deformationselementen 8 und den Schottblechen 9 sowie der Unterfahrschutz-Querträger 4 mit den Vertikalstreben 10 und den Längsträgern 11 eine Montageeinheit, die gegebenenfalls mit den bereits angebauten Kühlermodulen 5 und 7 an die Rahmenlängsträger 2 anbaubar ist.

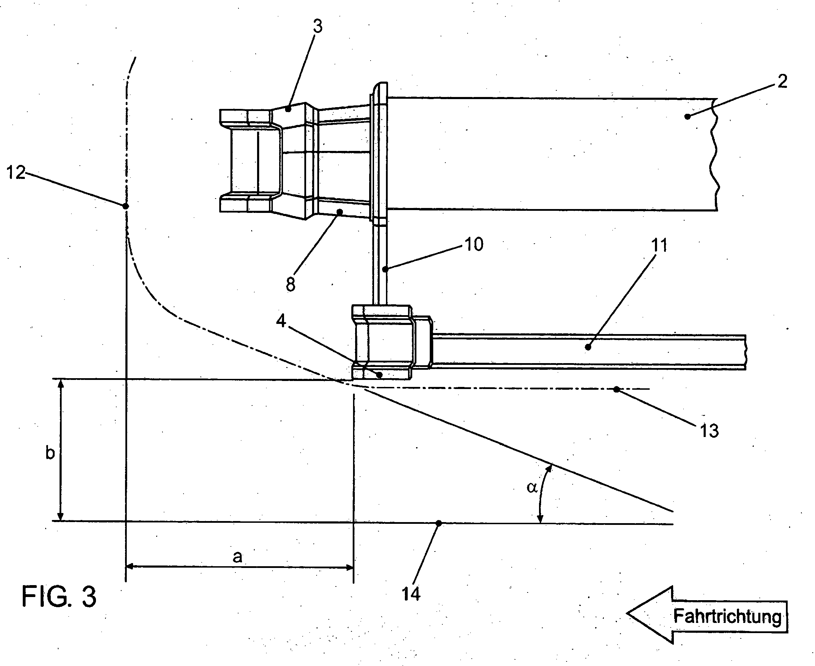

Die Seitenansicht Fig. 3 zeigt vereinfacht die Konfiguration der Vorbaustruktur 1 bzw. die Anordnung der Querträger 3 und 4 zueinander und im Vergleich der durch eine Frontschürze (nicht dargestellt) gebildeten, vorderen Außenkontur 12 und der Unterbodenkontur 13 des Nutzkraftfahrzeugs..

Dabei ist der Unterfahrschutz-Querträger 4 um ein Maß a von ca. 400 mm zur Außenkontur 12 und ca. um den halben Wert zum Stoßfängerquerträger 3 nach hinten versetzt, wodurch ein größerer Verformungsweg bei einem Frontalcrash geschaffen ist, der die Kühlermodule 5 und 7 vermehrt schützt.

Ferner beträgt der Abstand des Unterfahrschutz-Querträgers 4 zu einer horizontalen Fahrbahnebene 14 ca. 400 mm, woraus sich die eingezeichnete Bodenfreiheit (Unterbodenkontur 13) und der Böschungswinkel α (nach vorne ansteigende Linie 15 entlang der Konturen 12 und 13 und durch die senkrechte Radmitte der Vorderräder) definiert.

Die Erfindung ist nicht auf das dargestellte Ausführungsbeispiel beschränkt. Im Rahmen der Patentansprüche sind dem Fachmann geläufige Abwandlungen zum Beispiel aufgrund konstruktiver Gegebenheiten durchaus möglich.

So kann gegebenenfalls nur ein Kühlermodul 7 auf nur einer Fahzeügseite vorgesehen sein. Die Verstärkungen 10 und 11 des Unterfahrschutz-Querträgers 4 können gegebenenfallsauch in einer anderen Anzahl als beschrieben verwendet sein.

### Bezugszeichenliste

- 1: Vorbaustruktur
- 2: Rahmenlängsträger
- 3: Stoßfängerquerträger
- 4: Unterfahrschutz-Querträger
- 5: Kühlermodul
- 5a: Wärmetauscher
- 5b: Kondensator
- 6: Befestigungsmittel
- 7: Kühlermodule
- 8: Deförmationselemente
- 9: Schottbleche
- 10: Vertikalstreben
- 11: Längsträger
- 12: Vordere Außenkontur
- 13: Unterbodenkontur
- 14: Fahrbahn
- 15: Linie Böschungswinkel

## Patentansprüche

1. Vorbaustruktur für ein Nutzkraftfahrzeug, mit seitlichen Rahmenlängsträgern (2), einem Stoßfängerquerträger (3) und einem darunter angeordneten, als Unterfahrschutz dienenden Querträger (4), wobei der Querträger (4) zugleich ein hinter dem Stoßfängerquerträger (3) und zwischen den Rahmenlängsträgern (2) angeordnetes Kühlermodul (5) trägt, und wobei der Unterfahrschutz-Querträger (4) zum Stoßfängerquerträger (3) in Seitenansicht gesehen um einen Längsversatz (a) zur Fahrzeugaußenkontur (12) nach hinten versetzt ist und insbesondere das Kühlermodul (5, 7) trägt, **dadurch gekennzeichnet, dass** der Unterfahrschutz-Querträger (4) über mehrere Vertikalstreben (10) und über untere Längsträger (11) an die Rahmenlängsträger (2) mittelbar oder unmittelbar angebunden ist.

2. Vorbaustruktur nach Anspruch 1, **dadurch gekennzeichnet, dass** der Stoßfängerquerträger (3) im Wesentlichen bei den Rahmenlängsträgern (2) endet und über Deformationselemente (8) mit diesen verbunden ist, wobei das Kühlermodul (5, 7) in einer hinter den Deformationselementen (8) liegenden Vertikalquerebene positioniert ist.

3. Vorbaustruktur nach Anspruch 1 oder 2, **dadurch gekennzeichnet, dass** der Unterfahrschutz-Querträger (4) seitlich den Stoßfängerquerträger (3) überragend bis zur Radspur der Vorderräder des Nutzkraftfahrzeugs herangeführt ist und zusätzlich einseitig oder beidseitig außerhalb der Rahmenlängsträger (2) befindliche Kühlermodule (7) trägt.

4. Vorbaustruktur nach Anspruch 1, 2 oder 3, **dadurch gekennzeichnet, dass** der Längsversatz (a) maximal 400 mm oder kleiner ist und/oder dass die Unterkante des Unterfahrschutz-Querträgers (4) um einen Höhenversatz (b) von der Fahrbahn (14) beabstandet ist, der maximal 400 mm oder kleiner ist.

5. Vorbaustruktur nach einem der Ansprüche 1 bis 4, **dadurch gekennzeichnet, dass** die Vertikalstreben (10) an die Schottbieche (9) der Deformationselemente (8) angeformt sind oder mit diesen eine Baueinheit bilden.

6. Vorbaustruktur nach einem der Ansprüche 1 bis 5, **dadurch gekennzeichnet, dass** die unteren, eine geringere Steifigkeit als die Rahmenlängsträger (2) aufweisenden Längsträger (11) unterhalb der Rahmenlängsträger (2) verlaufend mit diesen lösbar verbunden, insbesondere verschraubt sind.

7. Vorbaustruktur nach einem der vorhergehenden Ansprüche, **dadurch gekennzeichnet, dass** die die Außenkontur (12) bildende Frontschürze des Nutzkraftfahrzeugs unter anderem an die Querträger (3, 4) angebunden ist, wobei der schräg nach vorne ansteigende Unterboden (13) mit der Unterkante des Unterfahrschutz-Querträgers (4) den Böschungswinkel α definiert.

8. Vorbaustruktur nach einem der vorhergehenden Ansprüche, **dadurch gekennzeichnet, dass** der Stoßfänger-Querträger (3) mit den Deformationselementen (8), der Unterfahrschutz-Querträger (4) mit den Vertikalstreben (10) und den Längsträgern (11) und die Kühlermodule (5, 7) eine Vormontageeinheit bilden, die unter anderem an die Rahmenlängsträger (2) anbaubar ist.

## Claims

1. Front structure for a commercial vehicle, with lateral frame longitudinal members (2), a bumper crossmember (3) and a crossmember (4) which is arranged below the latter and serves as an underride guard, wherein the crossmember (4) at the same time bears a radiator module (5) which is arranged behind the bumper crossmember (3) and between the frame longitudinal members (2), and wherein the underride-guard crossmember (4) is offset to the rear with respect to the bumper crossmember (3), as seen in side view, by a longitudinal offset (a) with respect to the vehicle outer contour (12) and in particular bears the radiator module (5, 7), **characterized in that** the underride-guard crossmember (4) is connected indirectly or directly to the frame longitudinal members (2) via a plurality of vertical struts (10) and via lower longitudinal members (11).

2. Front structure according to Claim 1, **characterized in that** the bumper crossmember (3) substantially ends at the frame longitudinal members (2) and is connected to the latter via deformation elements (8), wherein the radiator module (5, 7) is positioned in a vertical transverse plane lying behind the deformation elements (8).

3. Front structure according to Claim 1 or 2, **characterized in that** the underride-guard crossmember (4) is guided in a manner protruding laterally over the bumper crossmember (3) as far as the wheel track of the front wheels of the commercial vehicle and additionally bears radiator modules (7) located outside the frame longitudinal members (2) on one side or both sides.

4. Front structure according to Claim 1, 2 or 3, **characterized in that** the longitudinal offset (a) is at maximum 400 mm or smaller, and/or **in that** the lower edge underride-guard crossmember (4) is spaced apart from the carriageway (14) by a height offset (b) which is at maximum 400 mm or smaller.

5. Front structure according to one of Claims 1 to 4, **characterized in that** the vertical struts (10) are integrally formed on the bulkhead plates (9) of the deformation elements (8) or form a constructional unit therewith.

6. Front structure according to one of Claims 1 to 5, **characterized in that** the lower longitudinal members (11) having a lower degree of rigidity than the frame longitudinal members (2) and running below the frame longitudinal members (2) are releasably connected, in particular screwed, thereto.

7. Front structure according to one of the preceding claims, **characterized in that** the commercial-vehicle front skirt forming the outer contour (12) is connected, inter alia, to the crossmembers (3, 4), wherein the underbody (13) which rises obliquely forwards defines the angle of slope α with the lower edge of the underride-guard crossmember (4).

8. Front structure according to one of the preceding claims, **characterized in that** the bumper crossmember (3) with the deformation elements (8), the underride-guard crossmember (4) with the vertical struts (10) and the longitudinal members (11), and the radiator modules (5, 7) form a preassembly unit which can be mounted, inter alia, onto the frame longitudinal members (2).

## Revendications

1. Structure avant pour un véhicule utilitaire, comprenant des longerons de châssis latéraux (2), une traverse de pare-chocs (3) et une traverse (4) disposée en dessous, servant de protection antiencastrement, la traverse (4) portant en même temps un module de radiateur (5) disposé derrière la traverse de pare-chocs (3) et entre les longerons de châssis (2), et la traverse de protection antiencastrement (4), en vue de côté, étant décalée par rapport à la traverse de pare-chocs (3) vers l'arrière d'un décalage longitudinal (a) par rapport au contour extérieur du véhicule (12) et portant notamment le module de radiateur (5, 7), **caractérisée en ce que** la traverse de protection antiencastrement (4) est raccordée directement ou indirectement par le biais de plusieurs montants verticaux (10) et par le biais de longerons inférieurs (11) aux longerons de châssis (2).

2. Structure avant selon la revendication 1, **caractérisée en ce que** la traverse de pare-chocs (3) se termine essentiellement au niveau des longerons de châssis (2) et est raccordée à ceux-ci par le biais d'éléments de déformation (8), le module de radiateur (5, 7) étant positionné dans un plan transversal vertical situé derrière les éléments de déformation (8).

3. Structure avant selon la revendication 1 ou 2, **caractérisée en ce que** la traverse de protection antiencastrement (4) est avancée latéralement par rapport à la traverse de pare-chocs (3) en porte-à-faux jusqu'au passage des roues avant du véhicule utilitaire et porte en outre d'un côté ou des deux côtés des modules de radiateur (7) se trouvant à l'extérieur du longeron de châssis (2).

4. Structure avant selon la revendication 1, 2 ou 3, **caractérisée en ce que** le décalage longitudinal (a) vaut au maximum 400 mm ou moins et/ou **en ce que** l'arête inférieure de la traverse de protection antiencastrement (4) est espacée de la chaussée (14) d'un décalage en hauteur (b) qui vaut au maximum 400 mm ou moins.

5. Structure avant selon l'une quelconque des revendications 1 à 4, **caractérisée en ce que** les montants verticaux (10) sont façonnés sur les cloisons de séparation (9) des éléments de déformation (8) ou forment avec celles-ci une unité structurelle.

6. Structure avant selon l'une quelconque des revendications 1 à 5, **caractérisée en ce que** les longerons inférieurs (11), présentant une plus faible rigidité que les longerons de châssis (2), et s'étendant en dessous des longerons de châssis (2), sont raccordés à ceux-ci de manière détachable, en particulier par vissage.

7. Structure avant selon l'une quelconque des revendications précédentes, **caractérisée en ce que** le panneau avant formant le contour extérieur (12) du véhicule utilitaire est raccordé entre autres aux traverses (3, 4), le dessous de caisse (13) montant obliquement vers l'avant définissant, avec l'arête inférieure de la traverse de protection antiencastrement (4), l'angle de surplomb α.

8. Structure avant selon l'une quelconque des revendications précédentes, **caractérisée en ce que** la traverse de pare-chocs (3) avec les éléments de déformation (8), la traverse de protection antiencastrement (4) avec les montants verticaux (10) et les longerons (11), et les modules de radiateur (5, 7) forment une unité de prémontage qui peut être montée entre autres sur les longerons de châssis (2).
